# EUROPÄISCHE PATENTSCHRIFT

(11) **EP 1 127 267 B1**
(45) Veröffentlichungstag und Bekanntmachung des Hinweises auf die Patenterteilung: **13.07.2005**
(21) Anmeldenummer: 99952382.2
(22) Anmeldetag: 12.08.1999
(51) Int. Cl.: G01N 21/89, G01J 3/18, G02B 6/06, G02B 6/34, G01J 3/28

(54) **VORRICHTUNG ZUM ERFASSEN VON EIGENSCHAFTEN EINER IN LÄNGSRICHTUNG TRANSPORTIERTEN WARENBAHN**
DEVICE FOR DETECTING THE PROPERTIES OF A WEB OF MATERIAL TRANSPORTED IN THE LONGITUDINAL DIRECTION
DISPOSITIF POUR DETECTER DES PROPRIETES D'UNE BANDE DE MATERIAU TRANSPORTEE DANS LE SENS LONGITUDINAL

(30) Priorität: 02.11.1998 DE 19850335
(43) Veröffentlichungstag der Anmeldung: 29.08.2001
(73) Patentinhaber: Metso Paper Automation OY, 33900 Tampere (FI)
(72) Erfinder: SCHUMACHER, Ursula, D-52428 Jülich (DE)
(74) Vertreter: Leson, Thomas Johannes Alois, Dipl.-Ing.
(86) Internationale Anmeldenummer: PCT/DE1999/002530
(87) Internationale Veröffentlichungsnummer: WO 2000/026648

(56) Entgegenhaltungen:
- EP-A- 0 744 600
- DE-A- 3 526 553
- DE-A- 19 709 963
- DE-A- 19 728 966
- DE-U- 29 716 331

## Beschreibung

Die Erfindung bezieht sich auf eine Vorrichtung zum Erfassen von Eigenschaften einer in Längsrichtung transportierten Warenbahn, z.B. Papierbahn, a) mit einer Vielzahl von Lichtleitern, deren Eintrittsbereiche jeweils in Nähe der Oberfläche der Warenbahn angeordnet und auf diese Oberfläche gerichtet sind und die an einer Traverse, die die Warenbahn überquert, befestigt sind, b) mit einem Infrarot-Spektrometer, an dessen Eingang die Austrittsbereiche der Lichtleiter angeschlossen sind, c) mit Infrarot-Detektoren am Ausgang des Infrarot-Spektrometers und d) mit einer Erfassungs- und Auswerteelektronik.

Derartige Vorrichtungen und Verfahren werden zur Online-Prozeßkontrolle bei der kontinuierlichen Herstellung von Flächenwaren, wie Papier, Textilien, Folien usw. eingesetzt. Mittels der Vorrichtung können die meisten Prozeßchemikalien chemisch spezifisch erfaßt werden. Auf diese Weise können auch schnellste Verarbeitungsprozesse, wie z.B. bei der Papierherstellung und - Veredelung, ausreichend präzise verfolgt werden. Die Vorrichtung eignet sich daher bei allen kontinuierlichen Produktionsprozessen, bei denen ein oder mehrere Inhaltsstoffe qualitätsbestimmend sind. Sie wird deshalb an Mischern, Kalandern, Foulards, Rakeln, Dämpfern und Trocknern installiert, um Komponenten, Additive, Produktaufträge beim Beschichten, Imprägnieren, Kaschieren sowie den Feuchtegehalt beim Trocknen konstanter regeln zu können.

Die Vorrichtung der eingangs genannten Art ist aus der DE 197 09 963 A1 vorbekannt. Bei ihr sind die einzelnen Lichtleiter, die auch als Lichtleiterfasern bezeichnet werden und die an der Traverse angeordnet sind, zu einem Umschalter geführt, der nacheinander jede einzelne Lichtleiterfaser für eine Zeitspanne mit einer Transferfaser in optischen Kontakt bringt, welche an ein Spektrometer angeschlossen ist. Diesen Vorgang bezeichnet man auch als Multiplexen. Für einen kurzen Zeitabschnitt werden also nacheinander alle Einzelfasern an das Spektrometer angeschlossen und während dieser Anschlußzeitdauer wird das von der jeweiligen einzelnen Lichtleiterfaser erfaßte optische Signal ausgewertet.

Diese Ausbildung hat den Nachteil, dass einerseits eine mechanisch arbeitende Vorrichtung, nämlich der Schalter, eingesetzt wird, der mit sehr hoher Präzision optischen Kontakt zwischen unterschiedlichen Lichtleitern herstellen muß. Für den praktischen Einsatz ist es mit Schwierigkeiten verbunden, auf Dauer einen Umschalter so zu betreiben, dass er die optischen Signale präzise schaltet und überträgt. Andererseits wird durch den Umschalter für die Erfassung des Signals einer einzelnen Lichtleiterfaser nur wenig Zeit zur Verfügung gestellt. Dies bedeutet, dass das von dieser Faser gelieferte optische Signal im Zeitmittel nur für einen sehr geringen Anteil der Gesamtzeit erfaßt wird. Eine vollständige Erfassung einer Warenbahn ist damit nur schwierig möglich. Ein Ganzbild der Warenbahn, wie es zunehmend gefordert wird, kann man so nicht erhalten.

Aufgabe der Erfindung ist es, die Vorrichtung der eingangs genannten Art dahingehend weiterzuentwickeln, dass sowohl auf einen in der Herstellung und im praktischen Betrieb stets aufwendigen, mechanischen Umschalter verzichtet wird als auch eine höhere Erfassungsrate erzielt wird.

Diese Aufgabe wird durch die Merkmale des Anspruchs 1 gelöst.

Ausgehend von der Vorrichtung der eingangs genannten Art wird diese Aufgabe dadurch gelöst, dass das Infrarot-Spektrometer ein holographisches Gitter hat, dass die Lichtleiter am Eingang des Spektrometers als eine Zeile nebeneinander so angeordnet sind, dass die Infrarot-Spektren der Signale der einzelnen Lichtleiter am Ausgang des Spektrometers reihenförmig nebeneinander erscheinen, und dass die Infrarot-Detektoren am Ausgang von einer Detektorenmatrix mit n Zeilen und m Reihen aus Infrarot empfindlichen Einzelsensoren gebildet ist, wobei die Spektren von bis zu m Lichtleitern in bis zu n Spektralbereichen aufgeteilt und erfaßt werden können.

Diese Vorrichtung ermöglicht die gleichzeitige Überwachung von m Bereichen der Materialbahn. Auf diese m Bereiche sind die m Eintrittsbereiche der Lichtleiter gerichtet. Vorzugsweise ist die Anzahl der Eintrittsbereiche kleiner als m, z.B. 0,8 mal m, 0,5 mal m. Von jedem einzelnen, durch den Eintrittsbereich betrachteten Bereich der Warenbahn wird ständig ein vollständiges IR-Spektrum auf der Detektorenmatrix abgebildet. Wie diese Matrix nun ausgewertet wird, ist freigestellt, jedenfalls besteht die Möglichkeit, ständig die insgesamt bis zu m Spektren elektrisch zu erfassen und auszuwerten.

Insgesamt wird also durch die erfindungsgemäße Vorrichtung die Möglichkeit geschaffen, die zu überprüfende und untersuchende Warenbahn praktisch vollflächig abzutasten. Anders ausgedrückt wird die Möglichkeit geschaffen, ein Ganzbild dieser Warenbahn zu erhalten. Im Vergleich zu den bisher bekannten Vorrichtungen ist jedenfalls die Erfassungsrate wesentlich höher.

Als Detektorenmatrix werden handelsübliche Anordnungen verwendet, wie sie insbesondere für Kameras eingesetzt werden. Detektorenmatrizen, wie sie für die Erfindung einsetzbar sind, werden z.B. von der Firma Rockwell oder von Sensors Unlimited, Inc. angeboten, sie werden als Focalplane-Arrays bezeichnet. Sie sind typischerweise für den Wellenlängenbereich 0,9 bis 1,7 Mikrometer ausgelegt. Die Anzahl m der Reihen wird an das Infrarot-Spektrometer angepaßt, die einzelnen Spektren sollen im wesentlichen jeweils die einzelnen Reihen ausleuchten. Die Anzahl der Reihen der Detektorenmatrix ist üblicherweise größer als die Anzahl der Lichtleiter, in einer bevorzugten Weiterbildung wird zwischen zwei Spektren immer mindestens eine Zeile nicht ausgenutzt, um eine klare Trennung zwischen benachbarten Spektren zu erreichen. Weiterhin ist es durchaus möglich und auch beabsichtigt, mehrere benachbarte Einzelsensoren und damit Pixel zusammenzufassen und elektrisch gemeinsam zu betreiben. Die erfindungsgemäße Vorrichtung nutzt Detektorenmatrizen, wie sie auf dem Markt tatsächlich vorhanden sind. Bei ihnen ist die Größe der Einzelsensoren möglichst gering, damit eine hohe Auflösung erzielt wird. Für die erfindungsgemäße Vorrichtung ist dies jedoch nicht notwendig.

Aufgrund der Verwendung eines holographischen Gitters ist eine präzise, für die jeweils ausgewählte Position von Eingang und Ausgang des Spektrometers genau berechnete Ausbildung des Gitters möglich. In bevorzugter Ausbildung ist das holographische Gitter zylindrisch konvex ausgeführt. In einer weiteren, bevorzugten Ausbildung erfolgt die Abbildung des Eingangs auf den Ausgang durch eine Spiegeloptik. Dabei wird vorzugsweise ein konkaver Spiegel zwischen Eingang und Gitter angeordnet, vorzugsweise wird ein weiterer konkaver Spiegel zwischen dem Gitter und dem Ausgang vorgesehen.

Als Abbildungsverhältnis zwischen Eingang und Ausgang des Spektrometers haben sich Verhältnisse zwischen 0,5 zu 1 und 1 zu 0,5 bewährt, bevorzugt wird ein Abbildungsverhältnis von etwa 1 zu 1. Aufgrund der relativ kleinen Flächen der Detektorenmatritzen, wie sie auf dem Markt erhältlich sind, bedeutet dies sehr kleine Flächen für den Eingang des Spektrometers und damit die Notwendigkeit, ausgesprochen dünne Lichtfasern am Eingang zu verwenden. Typischerweise werden Lichtfasern mit Durchmesser 50 bis 60 Mikrometern eingesetzt. Sie werden im Eingang des Spektrometers dicht an dicht gepackt, wobei sie vorzugsweise eine lineare Anordnung einnehmen. Eine zick-zackförmige Zeile ist ebenfalls möglich.

Zur Erfassung der Eigenschaften der Warenbahn hat es sich als besonders vorteilhaft erwiesen, eine Matrix einzusetzen, die mehr als 100 Reihen und mehr als 100 Zeilen aufweist.

Die erfindungsgemäße Vorrichtung kann derart verwendet werden, dass von den n x m Einzelsensoren bei jeder vollständigen Abfrage höchstens 80%, vorzugsweise höchstens 60%, abgefragt werden, wobei insbesondere mehrere Einzelsensoren elektrisch zusammengeschaltet werden können.

Hinsichtlich des Abstands der Eintrittsbereiche von der Warenbahn hat sich ein Abstand von kleiner als 10mm, vorzugsweise kleiner als 5mm und insbesondere etwa 2mm bewährt.

Ein vorteilhafter Aufbau der Vorrichtung kann erreicht werden, wenn die Lichtleiter in einer Reihe nebeneinander an einer Traverse mit gleichem Abstand angeordnet sind und am Eingang des Spektrometers ein bestimmter Lichtleiter dieselben Lichtleiter als Nachbarn hat wie auch bei der Anordnung an der Traverse.

Die Verwendung von relativ dünnen Lichtleitern im Bereich von 50 bis 60 Mikrometern am Eingang des Spektrometers macht es erforderlich, entweder dieselben Lichtleiter bis zum Eintrittsbereich fortzuführen oder am Eintrittsbereich dickere Lichtleiter, beispielsweise mit Durchmessern von etwa 0,5 mm, zuverwenden und dann diese an die dünneren Lichtleiter anzukoppeln. Der zuerst beschriebene Weg hat den Vorteil, dass eine Kopplungsstelle zwischen einem dicken und einem dünnen Lichtleiter nicht notwendig ist, aber den Nachteil der sehr schwierigen Handhabbarkeit der ausgesprochen dünnen Lichtleiter. Dem kann dadurch begegnet werden, dass die Lichtleiter mit einem relativ dicken Mantel versehen werden, der ihre Handhabung vereinfacht. Dieser Mantel entfällt erst unmittelbar kurz vor dem Eingang des Spektrometers, wo die Lichtleiter dicht nebeneinander gepackt angeordnet sind. Der zweite Weg hat den Nachteil, dass eine Anzahl von bis zu n Lichtleitern mit größerem Durchmesser an eine gleiche Anzahl von Lichtleiterfasern mit dem kleinen Durchmesser angekoppelt werden muß. Dies ist zwar technisch möglich, aber aufwendig. Der zweite Weg hat den Vorteil, dass man mit den relativ dickeren Lichtleitern besser und einfacher arbeiten kann. Beide Wege haben vergleichbare Lichtausbeuten. Zwar wird durch die dickeren Lichtleiter, die im zweiten Weg eingesetzt werden, zunächst mehr Licht eingefangen und weitergeleitet, dies geht aber an der Übergangsstelle von dicken zu dünnen Lichtleitern verloren, so dass bei beiden Wegen ungefähr dergleiche Lichtstrom pro Lichtleiter dem Spektrometer zugeführt wird.

Es können Beleuchtungskörper für die zu untersuchende Warenbahn eingesetzt werden. Diese können punktförmige Lichtquellen aufweisen. Es kann in Transmission oder Reflektion gearbeitet werden.

Die Auswertung der Signale der Detektorenmatrix kann nach Verfahren gemäß dem Stand der Technik erfolgen. Hierzu wird beispielsweise auf die WO 97/20429 verwiesen. Sie bezieht sich auf eine Steuervorrichtung für ein CCD Element.

Die Empfindlichkeit der einzelnen Sensoren der Detektorenmatrix ist unterschiedlich. Verfahren zum Angleichen der Empfindlichkeit und auch der gesamten spektralen Eigenschaften der Einzelsensoren sind bekannt und werden für die erfindungsgemäße Vorrichtung eingesetzt. Zur Kompensation unterschiedlicher Dunkelspannungen kann beispielsweise ein Chopper im Lichtweg aller einzelnen Kanäle angeordnet werden, er wird vorzugsweise in unmittelbarer Nähe des Eingangs des Infrarot-Spektrometers vorgesehen. Weiterhin können Temperatursensoren der Detektorenmatrix zugeordnet werden, um dort die jeweilige Temperatur zu erfassen. Über die Temperatur können dann die Parameter der Detektorenmatrix, soweit sie temperaturabhängig ist, kompensiert werden. Hierfür werden bekannte Verfahren, wie beispielsweise FIR oder PDS eingesetzt. Hierzu wird auf die folgenden beiden Veröffentlichungen verwiesen "Standardization of Near-Infrared Spectrometric Instruments, E. Bouveresse et al., Analytical Chemistry, Vol. 68, No. 6, March 15, 1996" und "Transfer of Near-Infrared Multivariate Calibrations without Standards, Thomas B. Blank et al., Analytical Chemistry, Vol. 68, No. 17, September 1, 1996".

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung näher erläutert werden. In dieser Zeichnung zeigen:
- FIG. 1:: eine perspektivische Darstellung einer über einer Rolle transportierten Papierbahn, der eine Traverse mit daran befestigten Lichtleitern zugeordnet ist,
- FIG. 2:: eine prinzipielle Darstellung eines Infrarot-Spektrometers mit nachgeschalteter Auswerteelektronik,
- FIG. 3:: eine Draufsicht auf eine Detektorenmatrix,
- FIG. 4:: eine Frontansicht eines Teils eines Austrittsbereichs einer Vielzahl von Lichtleitern und
- FIG. 5:: eine teilweise geschnittene Seitenansicht eines Verbindungsbereichs zweier Lichtleiter mit unterschiedlichem Durchmesser.

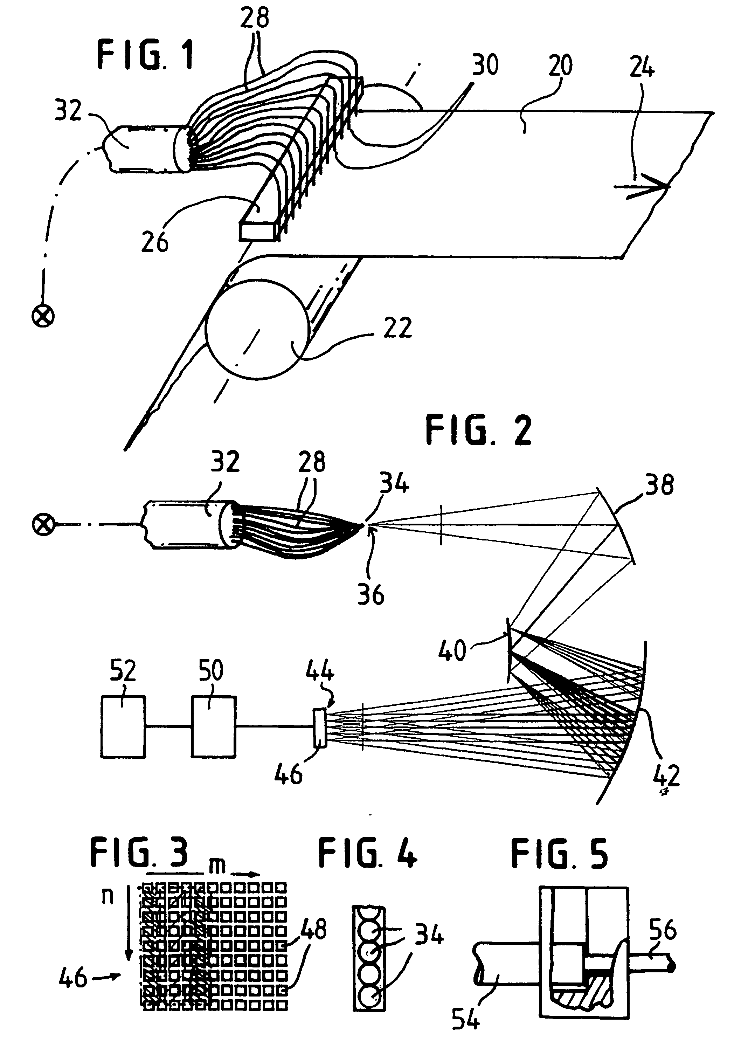

Gemäß Figur 1 läuft eine Papierbahn 20 über eine Rolle 22, die Laufrichtung ist durch den Pfeil 24 kenntlich gemacht. Oberhalb der Rolle 22 ist stationär eine Traverse 26 angeordnet, sie hat die Form eines parallel zur Achse der Rolle 22 angeordneten Balkens. An ihr ist eine Vielzahl von Lichtleitern 28 befestigt. Sie haben jeweils einen Eintrittsbereich 30, der in Figur 1 nach unten weist, er ist auf die obere Oberfläche der Papierbahn 20 gerichtet und befindet sich jeweils von dieser in einem geringen Abstand von beispielsweise 2 mm. Die einzelnen Eintrittsbereiche 30 sind auf einer Geraden angeordnet, parallel zur Achse der Rolle 22 verläuft, sie sind gleichabständig an der Traverse 26 befestigt. Sie sind im wesentlichen lotrecht auf die Papierbahn 20 gerichtet.

Die einzelnen Lichtleiter 28 sind einzeln zu einer Hülle 32 geführt und in dieser zusammengefaßt. In einer ersten Ausführung haben die Lichtleiter 28 einen Durchmesser von etwa 50 bis 60 Mikrometern. In einer zweiten Ausführung haben die Lichtleiter einen deutlich größeren Durchmesser, beispielsweise 500 Mikrometern. Sie werden auf Lichtleiter mit dem erstgenannten Durchmesser von etwa 50 bis 60 Mikrometern reduziert, hierfür wird eine Vorrichtung gemäß Figur 5 eingesetzt.

Wie aus Figur 2 ersichtlich ist, werden die einzelnen Lichtleiter 28 aus der sie zusammenfassenden Hülle 32 wieder einzeln herausgeführt und zu einer Linie unmittelbar nebeneinander liegender Lichtleiter zusammengefaßt. Eine Draufsicht auf eine derartige Linie gibt Figur 4. Die linienförmige Anordnung der Austrittsbereiche 34 der Lichtleiter 28, wie sie aus Figur 4 ersichtlich ist, ist am Eingang 36 eines Spektrometers positioniert. Dadurch wird praktisch der Eintrittsspalt dieses Spektrometers realisiert. Der Strahlengang des Spektrometers ist aus Figur 2 ersichtlich. Das aus den Austrittsbereichen 34 austretende Licht der einzelnen Lichtleiter 28 fällt zunächst auf einen ersten Hohlspiegel 38, von dort auf ein holographisches Gitter 40, das auf einer konvexen zylindrischen Fläche ausgebildet ist, gelangt schließlich auf einen zweiten Hohlspiegel 42 und wird von dort auf den Ausgang 44 des Spektrometers abgebildet. Insgesamt ist die Abbildung durch die beschriebene Optik im Verhältnis 1:1.

Am Ausgang 44 ist eine Detektorenmatrix 46 angeordnet. Das Spektrometer ist so dargestellt, dass die Austrittsbereiche 34 quer zur Papierebene gesehen übereinander liegen, also man in Längsrichtung auf die linienhafte Anordnung der Austrittsbereiche 34 schaut. Auf der Detektorenmatrix ist ein Spektrum im Wellenlängenbereich von 0,9 bis 1,7 Mikrometern abgebildet. Die weiteren Spektren der einzelnen Lichtsignale jedes Austrittsbereichs 34 liegen quer zur Papierebene unterhalb des dargestellten Spektrums.

Figur 3 zeigt einen Blick auf die Detektorenmatrix 46. Zur Vereinfachung hat sie relativ wenige Einzelsensoren 48, nämlich insgesamt neunundneunzig Einzelsensoren, die auf n = neun Zeilen und m = elf Zeilen aufgeteilt sind. Tatsächlich verwendete Detektorenmatrizen 46 haben ein vielfaches dieser Anzahl Einzelsensoren, beispielsweise 128 x 128 Einzelsensoren.

Im linken Teilbereich der Detektorenmatrix 46 sind für die Erläuterung drei Spektren nebeneinander dargestellt. Das erste Spektrum beleuchtet im wesentlichen die erste Reihe m = 1, teilweise war auch die Reihe m = 2. Das zweite Spektrum beleuchtet im wesentlichen die dritte Reihe m = 3, teilweise aber auch die beiden Nachbarreihen. Entsprechendes gilt für das dritte Spektrum, das im wesentlichen die fünfte Reihe m = 5 beleuchtet, aber auch die Nachbarreihen noch mitbeleuchtet. Für die Auswertung werden nur die Einzelsensoren der ersten, dritten und fünften usw. Reihe benutzt. Es ist möglich, den Abstand zwischen den benutzten Reihen größer zu machen. Dadurch wird erreicht, dass man einerseits die Spektren benachbarter Lichtleiter gut trennen kann, andererseits eine spezielle Anpassung der Optik usw. dahingehend, dass die Spektren nebeneinander in gleicher Reihenfolge auf den Reihen erscheinen, vermeidet. Eine derartige Abbildung ist zwar nicht ausgeschlossen, ist in der Praxis aber mit großen Schwierigkeiten bei der Justierung und Auslegung verbunden, wenn kleine Einzelsensoren, wie sie in handelsüblichen Fokalplane-Arrays zu finden sind, benutzt werden.

Im Beispiel nach Figur 3 werden etwa nur 50 % der Einzelsensoren 48 benutzt. Wenn nicht alle Einzelsensoren 48 der Detektorenmatrix 46 ausgewertet werden, bedeutet dies eine Vereinfachung für die nachgeschaltete Erfassungs- und Auswerteelektronik. Diese ist in Figur 2 dargestellt. Die Detektorenmatrix 46 ist mit einer ihr unmittelbar zugeordneten Steuerelektronik ausgestattet. Von dieser werden die Signale über eine dargestellte Leitung einer Auswertestufe 50 zugeleitet, die wiederum über eine Leitung mit einer Anzeige- und Speichereinheit 52 verbunden ist.

Die bereits erwähnte Figur 4 zeigt eine Vorderansicht auf das Austrittsende des Lichtleiterbündels. Zu erkennen sind die einzelnen Austrittsbereiche 34 jedes einzelnen Lichtleiters 28. Die Austrittsbereiche sind abstandslos dicht nebeneinander und entlang einer Geraden ausgerichtet. Die einzelnen Austrittsbereiche 34 befinden sich in einer Ebene. Im gezeigten Ausführungsbeispiel sind die Endbereiche der einzelnen Lichtleiter 28 zusammengefaßt und mittels einer Umspritzung zusammengehalten.

Die ebenfalls bereits erwähnte Figur 5 zeigt, wie bei Verwendung des zweiten Ausführungsbeispiels eine von links kommende, mit dem Eintrittsbereich 30 einstückig verbundene Faser 54 mit einem Durchmesser von etwa 0,5 Mikrometer optisch an eine dünnere Faser 56 mit einem Durchmesser von etwa 0,05 Mikrometer gekoppelt ist. Verwendet wird eine Struktur mit unmittelbar nebeneinanderliegenden, V-förmigen Einschnitten. Bei der Darstellung nach Figur 5 blickt man auf eine Innenfläche eines solchen V-Einschnitts. Er ist stufig ausgeführt, so dass beim Einlegen der vorgesehenen Fasern 54, 56 diese im wesentlichen zentrisch einander gegenüberstehen. Für die insgesamt bis zu m Lichtleiter sind eine entsprechende Anzahl von V-Einschnitten der erwähnten Art im Übertragungskörper, wie er in Figur 5 gezeigt ist, ausgebildet. Auf diese Weise können alle Lichtleiter 28 des oben beschriebenen zweiten Ausführungsbeispiels auf Fasern mit Durchmessern von etwa 0,06 Mikrometer reduziert werden.

## Patentansprüche

1. Vorrichtung zum Erfassen von Eigenschaften einer in Längsrichtung transportierten Warenbahn, z.B. Papierbahn (20),
- mit einer Vielzahl von Lichtleitern (28), deren Eintrittsbereiche (30) jeweils in Nähe der Oberfläche der Warenbahn angeordnet unnd auf diese Oberfläche gerichtet sind und die an einer Traverse (26), die die Warenbahn überquert, befestigt sind,
- mit einem Infrarot-Spektrometer, an dessen Eingang (36) die Austrittsbereiche (34) der Lichtleiter (28) angeschlossen sind,
- mit Infrarot-Detektoren am Ausgang (44) des Infrarot-Spektrometers und - mit einer Erfassungs- und Auswerteelektronik,
**dadurch gekennzeichnet, dass** das Infrarot-Spektrometer ein holographisches Gitter (40) hat, dass die Lichtleiter (28) am Eingang (36) des Spektrometers als eine Zeile nebeneinander so angeordnet sind, dass die Infrarot-Spektren der Signale der einzelnen Lichtleiter (28) am Ausgang (44) des Spektrometers reihenförmig nebeneinander erscheinen, und dass die Infrarot-Detektoren am Ausgang (44) von einer Detektorenmatrix (46) mit n Zeilen und m Reihen aus Infrarot empfindlichen Einzelsensoren (48) gebildet sind, wobei die Spektren von bis zu m Lichtleitern (28) in bis zu n Spektralbereichen aufgeteilt und erfasst werden können, wobei Signale der Einzelsensoren (48) der Erfassungs- und Auswerteelektronik zugeleitet werden.

2. Vorrichtung nach Anspruch 1, **dadurch gekennzeichnet, dass** das Gitter (40) zylindrisch konvex ausgebildet ist.

3. Vorrichtung nach Anspruch 1, **dadurch gekennzeichnet, dass** die Abbildung zwischen dem Eingang (36) des Spektrometers und dem Ausgang (44) des Spektrometers im Bereich von 0,5 zu 1 bis 1 zu 0,5 liegt und vorzugsweise etwa 1 zu 1 beträgt.

4. Vorrichtung nach Anspruch 1, **dadurch gekennzeichnet, dass** die Matrix mehr als 100 Reihen und mehr als 100 Zeilen aufweist.

5. Vorrichtung nach Anspruch 1, **dadurch gekennzeichnet, dass** sich zwischen zwei Spektren benachbarter Zeilen auf der Matrix immer mindestens eine unbenutzte Reihe Einzelsensoren (48) befindet.

6. Vorrichtung nach Anspruch 1, **dadurch gekennzeichnet, dass** eine Spiegeloptik vorgesehen ist, die den Eingang (36) auf den Ausgang (44) abbildet.

7. Verwendung der Vorrichtung nach Anspruch 1, **dadurch gekennzeichnet, dass** von den n x m Einzelsonsoren bei jeder vollständigen Abfrage höchstens 80 %, vorzugsweise höchstens 60 % abgefragt werden, insbesondere dass mehrere Einzelsensoren (48), z.B. vier, jeweils elektrisch zusammengeschalet werden.

8. Verwendung der Vorrichtung nach Anspruch 1, **dadurch gekennzeichnet, dass** der Abstand der Eintrittsbereiche (30) von der Warenbahn kleiner als 10 mm, vorzugsweise kleiner als 5 mm beträgt und insbesondere bei etwa 2 mm liegt.

9. Vorrichtung nach Anspruch 1, **dadurch gekennzeichnet, dass** die Lichtleiter (28) in einer Reihe nebeneinander an einer Traverse (26) mit gleichem Abstand angeordnet sind und dass am Eingang (36) des Spektrometers ein bestimmter Lichtleiter (28) dieselben Lichtleiter (28) als Nachbarn hat wie bei der Anordnung an der Traverse (26).

## Claims

1. A device for detecting properties of a material web, e.g. a paper web (20), conveyed in the longitudinal direction,
- having a plurality of optical fibres (28), whose inlet areas (30) are each arranged in the vicinity of the surface of the material web and are directed towards said surface and which are attached to a crossbeam (26) which crosses the material web,
- having an infrared spectrometer, to the input (36) of which there are connected the outlet areas (34) of the optical fibres (28),
- having infrared detectors at the output (44) of the infrared spectrometer and
- having detecting and evaluating electronics,
**characterised in that** the infrared spectrometer has a holographic grating (40), **in that** the optical fibres (28) are arranged next to one another in a line at the input (36) of the spectrometer in such a way that the infrared spectra of the signals of the individual optical fibres (28) appear next to one another in a row at the output (44) of the spectrometer, and **in that** the infrared detectors at the output (44) take the form of a detector matrix (46) with n lines and m rows of infrared-sensitive individual sensors (48), wherein the spectra of up to m optical fibres (28) may be subdivided into up to n spectral regions and detected, wherein signals from the individual sensors (48) are supplied to the detecting and evaluating electronics.

2. A device according to claim 1, **characterised in that** the grating (40) is of cylindrically convex construction.

3. A device according to claim 1, **characterised in that** the imaging ratio between the input (36) of the spectrometer and the output (44) of the spectrometer lies in the range of 0.5:1 to 1:0.5 and preferably approximately 1:1.

4. A device according to claim 1, **characterised in that** the matrix comprises more than 100 rows and more than 100 lines.

5. A device according to claim 1, **characterised in that** at least one unused row of individual sensors (48) is always located between two spectra of adjacent lines on the matrix.

6. A device according to claim 1, **characterised in that** specular optics are provided, which image the input (36) onto the output (44).

7. Use of the device according to claim 1, **characterised in that**, on each complete interrogation, at most 80%, preferably at most 60%, of the n x m individual sensors are interrogated, in particular **in that** a plurality of individual sensors (48), e.g. four, are in each case electrically connected.

8. Use of the device according to claim 1, **characterised in that** the distance between the inlet areas (30) and the material web is less than 10 mm, preferably less than 5 mm, and in particular approximately 2 mm.

9. A device according to claim 1, **characterised in that** the optical fibres (28) are arranged equidistantly next to one another in a row on a crossbeam (26) and **in that** a given optical fibre (28) has the same optical fibres (28) as neighbours at the input (36) of the spectrometer as in the arrangement on the crossbeam (26).

## Revendications

1. Dispositif pour détecter des caractéristiques d'une bande de matériau transportée dans une direction longitudinale, par exemple une bande de papier (20), comportant
- une pluralité de guides de lumière (28), dont les zones d'entrée (30) sont disposées respectivement à proximité de la surface supérieure de la bande de matériau et sont dirigées sur cette surface supérieure et qui sont fixées à une traverse (26) qui est disposée transversalement en surplomb de la bande de matériau,
- un spectromètre à infrarouge, à l'entrée duquel (36) sont raccordées des zones de sortie (34) des guides de lumière (28),
- des détecteurs à infrarouge disposés à la sortie (44) des spectromètres à infrarouge, et
- une unité électronique de détection et d'évaluation,
**caractérisé en ce que** le spectromètre à infrarouge possède un réseau à grille holographique (40), **en ce que** les guides de lumière (28) sont disposés côte-à-côte à l'entrée (36) du spectromètre sous la forme d'une ligne de telle sorte que les spectres infrarouges des signaux respectifs des différents guides de lumière (28) apparaissent côte-à-côte sous la forme d'une rangée à la sortie (44) du spectromètre, et **en ce que** les détecteurs à infrarouge sont formés à la sortie (44) d'une matrice de détecteurs (46) comportant n lignes et m rangées de capteurs individuels (48) sensibles à l'infrarouge, les spectres pouvant être répartis de jusqu'à m guides de lumières (28) dans jusqu'à m plages spectrales et être détectés, les signaux des capteurs individuels (48) étant envoyés à l'unité électronique de détection et d'évaluation.

2. Dispositif selon la revendication 1, **caractérisé en ce que** la grille (40) est agencée avec une forme convexe cylindrique.

3. Dispositif selon la revendication 1, **caractérisé en ce que** la formation d'image entre l'entrée (36) du spectromètre et la sortie (44) du spectromètre est située dans la gamme de 0,5 sur 1 à 1 sur 0,5 et de préférence est égale approximativement à un sur un.

4. Dispositif selon la revendication 1, **caractérisé en ce que** la matrice comporte plus de 100 rangées et de plus de 100 lignes.

5. Dispositif selon la revendication 1, **caractérisé en ce qu'**au moins une rangée non utilisée de capteurs individuels (48) est située en permanence entre deux spectres de lignes voisines sur la matrice.

6. Dispositif selon la revendication 1, **caractérisé en ce qu'**il est prévu une optique à miroir, qui forme l'image de l'entrée (36) à la sortie (44).

7. Utilisation du dispositif selon la revendication 1, **caractérisée en ce que** lors de chaque interrogation complète, au maximum 80 %, de préférence au maximum 60 % des m x n capteurs individuels sont interrogés, notamment que plusieurs capteurs individuels (48), par exemple quatre, sont respectivement interconnectés entre eux.

8. Utilisation du dispositif selon la revendication 1, **caractérisée en ce que** la distance des zones d'entrée (30) par rapport à la bande de matériau est inférieure à 10 mm, et de préférence inférieure à 5 mm et notamment est égale à environ 2 mm.

9. Dispositif selon la revendication 1, **caractérisé en ce que** les guides de lumière (28) sont disposés côte-à-côte suivant une rangée sur une traverse (26) à égale distance et **en ce qu'**à l'entrée (36) du spectromètre, un guide de lumière déterminé (28) possède comme voisin le même guide de lumière (28) que dans le cas de la disposition sur la traverse (26).
